# EUROPEAN PATENT APPLICATION

(11) **EP 2 405 529 A1**
(43) Date of publication of application: **11.01.2012**
(21) Application number: 10748528.6
(22) Date of filing: 04.03.2010
(51) Int. Cl.: H01M 14/00, H01L 31/04

(54) **PHOTOELECTRIC CONVERSION ELEMENT, PROCESS FOR PRODUCING SAME, OPTICAL SENSOR, AND SOLAR CELL**

(30) Priority: 06.03.2009 JP 2009053148
(71) Applicant: NEC Corporation, Tokyo 108-8001 (JP)
(72) Inventor: KOBAYASHI, Kenji, Tokyo 108-8001 (JP); NAKAHARA, Kentaro, Tokyo 108-8001 (JP); SUGURO, Masahiro, Tokyo 108-8001 (JP); NAKAMURA, Shin, Tokyo 1088001 (JP)
(74) Representative: Glawe, Delfs, Moll
(86) International application number: PCT/JP2010/001507
(87) International publication number: WO 2010/100929

(57) **Abstract**

A photoelectric conversion element is provided which includes a photoelectrode (101) having a porous semiconductor layer (106) and a transparent electrode (107) and a counter electrode (102) disposed to face the photoelectrode (101) and in which a nitroxyl radical compound expressed by General Formula 1 is mainly enclosed between the photoelectrode (101) and the counter electrode (102).
(where A in General Formula 1 represents a substituted or unsubstituted, aromatic group and may contain one or more atoms of oxygen, nitrogen, sulfur, silicon, phosphorus, boron, or halogen and the aromatic group may be obtained by condensing a plurality of aromatic groups).

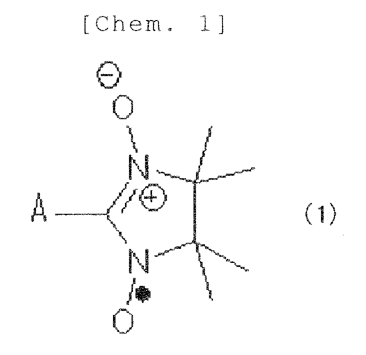

## Description

### TECHNICAL FIELD

The present invention relates to a photoelectric conversion element, a manufacturing method thereof, an optical sensor, and a solar cell.

### BACKGROUND ART

Hitherto, various photoelectric conversion elements converting optical energy into electrical energy have been suggested. Among these, solar cells have been studied and developed more and more actively as a clean energy source for the next generation to be an alternative to fossil fuels. Solar cells presently put into practical use are of a PN junction type using an inorganic semiconductor such as silicon but the higher cost of power generation than other energy sources has become a barrier to their spreading. Accordingly, new solar cells of which the manufacturing cost can be greatly reduced have been suggested.

In a dye-sensitized solar cell (Graetzel type) suggested by Graetzel et al, Federal Institute of Technology Lausanne, Switzerland, 1991, a conversion efficiency of the same level as amorphous silicon was achieved using relatively-cheap materials and simple and easy manufacturing processes. Accordingly, the Graetzel type dye-sensitized solar cell is expected to be put into practical use as a next generation solar cell.

The Graetzel type dye-sensitized solar cell includes a photoelectrode in which a porous semiconductor layer absorbing dye having a light-absorbing function is formed on a conductive substrate, a counter electrode opposed to the photoelectrode and formed of a conductive material, and an electrolyte layer (charge transport layer) disposed between both electrodes. In the Graetzel type dye-sensitized solar cell, electrons are injected into a semiconductor electrode from an excited dye having absorbed light and the electrons move to the dye by an oxidation reaction of a redox agent in the electrolyte. The redox agent in the electrolyte is reduced again in the counter electrode, whereby the cell works. Such photochemical reaction cells using a dye sensitization effect were known in the past. However, in the Graetzel type dye-sensitized solar cell, the effective reaction surface area increases by 1000 times by using a porous titania electrode formed by sintering particulates as the semiconductor electrode, thereby extracting a larger photocurrent.

An example of the dye used in the Graetzel type dye-sensitized solar cell is a spectral sensitizing dye including a transition metal complex as described in Patent Document 1. More specifically, cisbis(isothiocyanato)-bis-(2,2'-bipyridil4,4'-dica rboxylate) ruthenium(II) bis-tetrabutylammonium complex (so-called N719) which is a kind of bipyridine complex and which has an excellent effect as the sensitizing dye is typically used as the spectral sensitizing dye. In addition, cisbis(isothiocyanato)-bis-(2,2'-bipyridil-4,4'-dic arboxylate) ruthenium(II) (so-called N3) which is a kind of bipyridine complex or tris(isothiocyanato)(2,2':6',2"-terpyridil-4,4',4"-tricarboxylate) ruthenium(II) tris-tetrabutylammonium complex (so-called black dye) which is a kind of tripyridine complex is typically used. In recent years, organic materials not containing a metal complex, such as derivatives of coumarin-based materials, have been reported.

Regarding the electrolyte layer used in the Graetzel type dye-sensitized solar cell, a method of interposing an electrolyte, which is obtained by dissolving a redox agent containing iodine and/or iodide ions in a nitrite-based organic solvent or an ionic liquid with low volatility, between the semiconductor electrode and the counter electrode is typically used. Since iodine with high corrosivity is used in such a method, Patent Document 2 discloses that the electrolyte is made into a pseudo-solid by gelation so as to prevent leakage of liquid to the outside. It was also reported that 2,2,6,6-tetramethylpiperidine N-oxyl (TEMPO) radical is used as a redox agent not containing iodine (Non-Patent Document 1).

### RELATED DOCUMENT

### PATENT DOCUMENT

[Patent Document 1] Japanese Laid-open Patent Publication No. 11-345991
[Patent Document 2] Japanese Laid-open Patent Publication No. 2002-289271

### NON-PATENT DOCUMENT

[Non-Patent Document 1] "The 2,2,6,6-Tetramethyl-1-piperidinyloxy Radical: An Efficient, Iodine-Free Redox Mediator for Dye-Sensitized Solar Cells", Z. Zhang, P. Chen, T. N. Murakami, S. M. Zakeeruddin, M. Graetzel, Advanced Functional Materials, Vol. 18, 2008, p. 341-346

### DISCLOSURES OF THE INVENTION

### Problem to be Solved by the Invention

Hitherto, the Graetzel type dye-sensitized solar cell has been exemplified. Such photoelectric conversion elements have been variously studied and have room for improvement in terms of usefulness.
A goal of the invention is to provide a photoelectric conversion element excellent in usefulness.

### Means for Solving the Problem

According to the invention, there is provided a photoelectric conversion element, including: a photoelectrode that includes a semiconductor layer and a transparent conductive substrate; and a counter electrode that is opposed to the photoelectrode, wherein a nitroxyl radical compound expressed by General Formula 1 is mainly enclosed between the photoelectrode and the counter electrode.

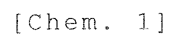

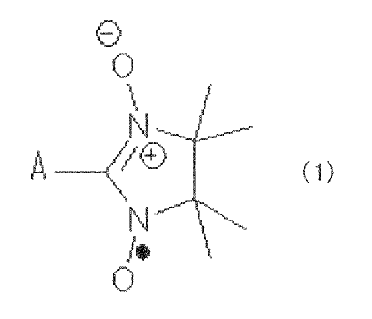

(where A in General Formula 1 represents a substituted or unsubstituted aromatic group and may contain one or more atoms of oxygen, nitrogen, sulfur, silicon, phosphorus, boron, or a halogen and the aromatic group may be obtained by condensing a plurality of aromatic groups).

According to the invention, there is provided an optical sensor including the photoelectric conversion element.
According to the invention, there is provided a solar cell including the photoelectric conversion element.

According to the invention, there is provided a method of manufacturing a photoelectric conversion element, including: preparing a semiconductor electrode formed of a porous semiconductor material; disposing a counter electrode to be opposed to the semiconductor electrode; and impregnating and enclosing a liquid containing dye and electrolyte between the semiconductor electrode and the counter electrode, wherein the dye and electrolyte contains a nitroxyl radical compound expressed by General Formula 1.

### Advantageous Effect

According to the invention, it is possible to implement a photoelectric conversion element excellent in usefulness without using iodine in an electrolyte layer, by using a compound having a specific structure expressed by General Formula 1.

### DESCRIPTION OF THE DRAWINGS

Fig. 1 is a sectional view schematically illustrating a basic structure of a photoelectric conversion element according to an embodiment of the invention.
Fig. 2 is a diagram schematically illustrating a method of forming the photoelectric conversion element according to the embodiment.
Fig. 3 is a diagram schematically illustrating the method of forming the photoelectric conversion element according to the embodiment.
Fig. 4 is a diagram illustrating the configuration of a solar photovoltaic system according to an embodiment of the invention.
Fig. 5 is a sectional view illustrating the configuration of a photoelectric conversion element stack according to the embodiment.
Fig. 6 is a sectional view illustrating the configuration of a photoelectric conversion element stack according to the embodiment.
Fig. 7 is a sectional view illustrating the configuration of a photoelectric conversion element stack according to the embodiment.
Fig. 8 is a sectional view illustrating the configuration of a photoelectric conversion element stack according to the embodiment.
Fig. 9 is a diagram illustrating the circuit configuration of an optical sensor according to the embodiment.
Fig. 10 is a diagram illustrating an I-V curve of the optical conversion element according to the embodiment.

### DESCRIPTION OF EMBODIMENTS

Hereinafter, embodiments of the invention will be described with reference to the accompanying drawings. In all the drawings, like elements are referenced by like reference numerals and signs and will not be repeated.

### (First Embodiment)

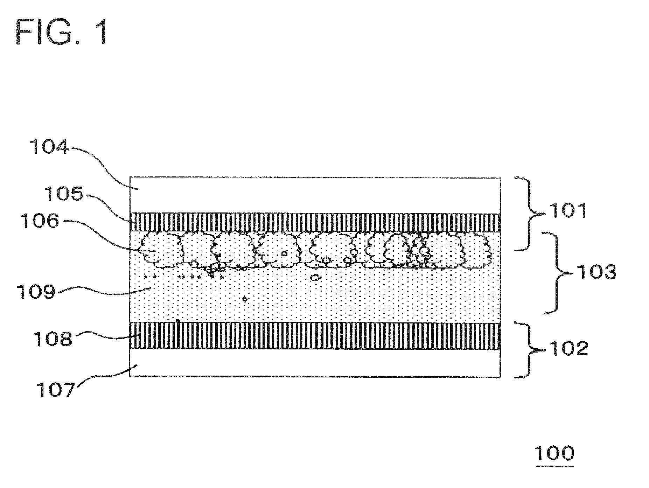

Fig. 1 is a sectional view illustrating the configuration of a photoelectric conversion element according to an embodiment of the invention. A photoelectric conversion element 100 shown in Fig. 1 includes a photoelectrode 101 including a semiconductor layer (a porous semiconductor layer 106) and a transparent conductive substrate (a transparent electrode 104) and a counter electrode (a transparent electrode 107) disposed to face the photoelectrode 101. The photoelectrode 101 is formed of a substrate (a transparent conductive substrate, a transparent electrode 104) having the porous semiconductor layer 106. The transparent electrode 107 is stacked to face the photoelectrode 101.
A nitroxyl radical compound having a structure of 4,4,5,5-tetraalkyl imidazoline-1-oxyl 3-oxide expressed by General Formula 1 as a compound having a light-absorbing function and a redox function is mainly included between the photoelectrode 101 and the transparent electrode 107. Here, the term "be mainly included" means that 50 wt% or more of the compound having a light-absorbing function and a redox function is included. The organic radical compound is used, for example, as a solution obtained by dissolving the organic radical compound in one of an organic solvent, a molten salt, and an ionic liquid.
Elements of the photoelectric conversion element 100 will be described in detail.

### Photoelectrode

A member in which the porous semiconductor layer 106 is formed on a transparent conductive substrate is used as the photoelectrode 101.

The conductive substrate may be a substrate having conductivity or may be a substrate having a conductive layer formed thereon. Examples of the substrate include a glass substrate, a plastic substrate, and a metal substrate. Among these, a substrate having high transparency (the transparent electrode 104) is particularly preferably used.

When a conductive layer is formed on a substrate, a transparent conductive layer of, for example, indium-tin-oxide (ITO), fluorine-doped tin oxide (FTO), indium zinc oxide (IZO), tin oxide (SnO₂) can be used. The transparent conductive layer may be formed in a film shape on the entire or partial surface of the substrate. The manufacturing method and the thickness of the conductive layer can be properly selected. The surface resistance value is preferably low and is specifically preferably equal to or less than 20 Ω/□.

An n-type inorganic semiconductor can be preferably used as the semiconductor material of the semiconductor layer. Examples of the n-type inorganic semiconductor include known semiconductors such as titanium dioxide, zinc oxide, tin oxide, niobium oxide, tungsten oxide, strontium titanate, cadmium sulfide, zinc sulfide, iron sulfide, and cadmium selenide. Two or more kinds of these semiconductor materials may be combined for use. Among these, the semiconductor layer is preferably formed of a semiconductor layer containing titanium dioxide in terms of conversion efficiency, stability, and safety. Specific examples of titanium dioxide include various titanium dioxides such as anatase-type titanium dioxide, rutile-type titanium dioxide, amorphous titanium dioxide, metatitanic acid, and orthotitanic acid and titanium dioxide-containing complex. Among these, the anatase titanium dioxide is preferably used in terms of further improvement of stability of the photoelectric conversion.

Examples of the shape of the semiconductor layer include the porous semiconductor layer 106 obtained by sintering semiconductor particulates and the like and a filmy semiconductor layer obtained by the use of a sol-gel method, a sputtering method, a spray-pyrolysis method, and the like. A fibrous semiconductor layer or a semiconductor layer having a needle-like crystal form can be properly selected depending on the application purpose of the photoelectric conversion elements. Among these, a semiconductor layer having a large specific area can be preferably used and the porous semiconductor layer 106 formed of semiconductor particulates can be preferably used in terms of adjustment of utilization ratio of incident light depending on the diameters of the semiconductor particulates.

Here, the initial particles of semiconductor may have an average particle diameter, for example, equal to or larger than 10 nm and equal or less than 80 nm. In terms of enhancement of light scatterin in the electrode, it is preferably that large particulates having a particle size equal to or greater than 100 nm are added thereto.

The semiconductor layer may have a single layer or multiple layers. It is possible to more easily form a semiconductor layer with a sufficient thickness by forming the semiconductor layer out of multiple layers.

### (Counter Electrode)

In the counter electrode 102, a film of metal catalyst such as platinum or carbon may be disposed as the conductive layer 108 on a support substrate (the transparent electrode 107). The thickness may be a thickness sufficient to exhibit a catalyst function and is preferably in the range of 1 to 2000 nm. The surface area thereof is preferably as high as possible. A more specific example of the counter electrode 102 is a structure in which a transparent conductive layer such as ITO or a thin metal film such as SUS is formed on a glass or polymer film.
Specifically, the conductive layer 108 includes a catalyst portion having a catalyst function of oxidizing and reducing a radical and a power collection portion. The catalyst portion and the power collection portion may be formed of the same material or may be formed of different materials. In terms of more improvement of the light-absorbing characteristic, the power collection portion is preferably formed on the transparent electrode 107 using the transparent electrode 107 formed of glass or plastics as the support substrate. In a W-shaped stack module to be described later in a second embodiment, the power collection portion is formed of a transparent member.

### (Organic Compound Layer (Dye Sensitizer and Redox Agent))

In the photoelectric conversion element 100 an organic compound holding layer 103 containing and holding a nitroxyl radical compound serving as a dye sensitizer and a redox agent is disposed between the photoelectrode 101 and the counter electrode 102. The nitroxyl radical compound is specifically held as a solution in which it is dissolved in one or more selected from the group consisting of an organic solvent, a molten salt, and an ionic liquid between the photoelectrode 101. and the counter electrode 102.

The organic radical compound having both functions of the dye sensitizer and the redox agent is a nitroxyl compound having a nitroxyl cation structure in an oxidized state and a nitroxyl radical structure in a reduced state and preferably has an absorption zone in the range from a visible wavelength band to an infrared wavelength band. Specifically, the organic radical compound preferably contains a nitroxyl radical compound having a structure of 4,4,5,5-tetraalkyl imidazoline-1-oxyl 3-oxide expressed by General Formula 1 The organic compound holding layer 103 can contain one or two or more compound as the compound expressed by General Formula 1, but it is preferable in terms of more improvement of the operational stability of the element that a single compound is contained as the compound expressed by General Formula 1.

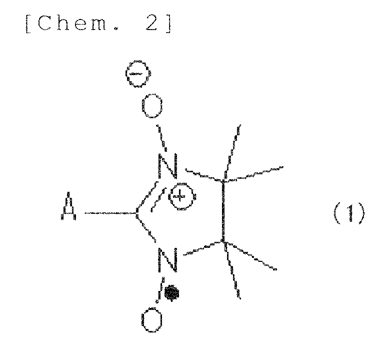

(where A in General Formula 1 represents a substituted or unsubstituted aromatic group and may contain one or more atoms of oxygen, nitrogen, sulfur, silicon, phosphorus, boron, or a halogen and the aromatic group may be obtained by condensing a plurality of aromatic groups).

In General Formula 1, A represents a substituted or unsubstituted aromatic group. The aromatic group in the invention means a cyclic unsaturated organic substituent and specific examples thereof include an aromatic carbonhydride group, an aromatic heterocycle group, and a condensed polycyclic aromatic group

More specific example of the aromatic group A include a phenyl group, a biphenyl group, terphenyl group, a tetrakisphenyl group, a styryl group, a naphthyl group, an anthryl group, an acenaphthenyl group, a fluorenyl group, a phenanthryl group, an indenyl group, a pyrenyl group, a pyridyl group, a bipyridyl group, a pyridazyl group, a pyrimidyl group, a pyrazyl group, a furanyl group, a pyronil group, a thiophenyl group, a isoquinolyl group, an imidazolyl group, a benzofuranyl group, a benzothiophenyl group, an indolyl group, a carbazolyl group, a benzoxazolyl group, a quinoxalyl group, a benzoimidazolyl group, a pyrazolyl group, a dibenzofuranyl group, and a debenzothiophenyl group.

Among these, in terms of stability, it is preferably that A is one selected from the group of a phenyl group, a pyridyl group, and a bipyridyl group. It is possible to obtain a large effect by using 2-phenyl-4,4,5,5-tetramethyl imidazoline-1-oxyl 3-oxide expressed by General Formula 2 in which A is a phenyl group.

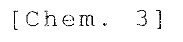

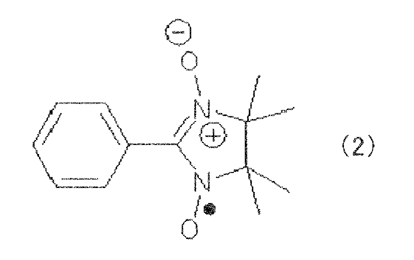

In the photoelectric conversion element 100, plural compounds to be described below will be combined and used as the compound expressed by General Formula 1.
A compound expressed by Formula 2 and a compound in which A in General Formula 1 has one or more substituents selected from the group of an alkoxy group, a hydroxyl group, a hydroxyalkyl group, a sulfonate group, an ester group, a mercapto group, and a phosphonyl group.

In terms of enhancement of a dye sensitization effect to the surface of the porous semiconductor, it is possible to obtain a larger effect by using 2-(4-carboxypheriyl)-4,4,5,5-tetramethyl imidazoline-1-oxyl 3-oxide expressed by Formula 3.

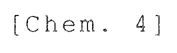

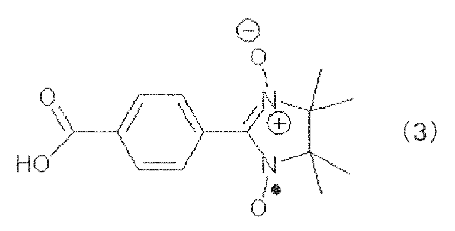

Here, a group having interlock groups such as an alkoxy group (for example, with a carbon number of 1 to 5), a hydroxyl group, a hydroxyalkyl group (for example, with a carbon number of 1 to 5), a sulfonate group, an ester group (for example, with a carbon number of 1 to 5), a mercapto group, and a phosphonyl group may be used instead of the carboxyl group. The interlock group serves to provide an electrical coupling of facilitating the electron migration between the excited dye and the conduction band of the semiconductor.

When the hydroxyl group or the carboxyl group is substituted, the hydroxyl group or the carboxyl group may form a salt in cooperation with metal ions of lithium, sodium, magnesium, potassium, calcium, and the like.

The dye may be a dimer having two coupled structures of 4,4,5,5-tetramethyl imidazoline-1-oxyl 3-oxide, a trimer having three coupled structures thereof, a tetramer having four coupled structures thereof, an oligomer having plural coupled structures thereof, or a part of a polymer having plural coupled structures. The polymer may have a chained shape, a cyclic shape, or a branched shape.

The nitroxyl radical compound is held, for example, as a solution in which it is dissolved in one or more selected from the group consisting of an organic solvent, a molten salt, and an ionic liquid between the photoelectrode 101 and the counter electrode 102.
The nitroxyl organic compounds can be preferably dispersed in an appropriate solvent and can be used as a dispersion liquid or solution.
Examples of the solvent include as the organic solvent nitrogen-containing compounds such as N-methylpyrrolidone and N,N-dimethylformamide; nitrile compounds such as methoxypropionitrile and acetonitrile; lactone comounds such as γ-butyrolactone and valerolactone; carbonate compounds such as ethylene carbonate, diethyl carbonate, dimethyl carbonate, and propylene carbonate; ethers such as tetrahydrofuran, dioxane, diethyl ether, and ethyleneglycoldialkyl ether; alcohols such as methanol, ethanol, and isopropyl alcohol; and imidazols. These can be used alone or in combination of two or more.

It is preferable that an ionic liquid, that is, a molten salt, is mixed into the organic solvent. This serves to improve the suppression of volatilization of the organic solvent and the conductivity in a cell by adding cations thereto. The ionic liquid is not particularly limited, as long as it can be generally used in known cells or solar cells and is disclosed in "Inorg. Chem.", 1996, 35, p. 1168-1178, "Electrochemistry", 2002. 2, p. 130-136, PCT Japanese Translation Patent Application Publication No. 9-507334, and Japanese Unexamined Patent Application Publication No. 8-259543. A salt having a melting point lower than the room temperature (25°C) or a salt which is liquefied at the room temperature by dissolving another molten salt or additives other than molten salt can be preferably used.

Specific examples of the molten salt include as a cation ammonium, imidazolium, oxazolium, thiazolium, piperidinium, pyrazolium, isooxazolium, thiadiazolium, oxadiazolium, traizolium, pyrrolidinium, pyridinium, pyrimidinium, pyridazinium, pyradinium, triazinium, phosphonium, sulfonium, carbazolium, indrium, and derivatives thereof. Ammonium, imidazolium, pyridinium, pyperidinium, pyrazolium, and sulfonium can be particularly preferably used. Specific examples of the molten salt includes as an anion metal chlorides such as AlCl₄- and Al₂Cl₇-, fluorin-containing materials such as PF₆-, BF₄-, CF₃SO₃-, N(CF₃SO₂)₂-, and CF₃COO-, fluorine-non-containing materials such as NO₃-, CH₃COO-, C₆H₁₁COO-, CH₃OSO₃-, CH₃OSO₂-, CH₃SO₃-, CH₃SO₂-, and (CH₃O)₂PO₂-, and halides such as chlorine, bromine, and iodine.

The molten salt can be synthesized using various methods known by various documents or publbications. For example, a quaternary ammanium salt can be synthesized by adding alkylhalide as an alkylating agent to tertiary amine to quaternize amine as a first step and ion-exchanging halide anions with target anions as a second step. Alternatively, a target compound is obtained in the first statep by causing tertiary amine to react with acid having target anions. Specifically, such an organic compound solution is sealed between the semiconductor layer and the counter electrode for use.

### (Photoelectric Conversion Element)

The photoelectric conversion element 100 using the above-mentioned constituents is manufactured, for example, in the following procedure:
Step 11: a step of preparing a semiconductor electrode (the photoelectrode 101) formed of a porous semiconductor materials;
Step 12: a step of disposing a counter electrode (the counter electrode 102) to face the photoelectrode 101; and
Step 13 a step of injecting and holding an organic compound solution (a liquid containing dye and electrolyte) between the photoelectrode 101 and the counter electrode 102.
The dye and the electrolyte used in step S13 contains the compound expressed by General Formula 1.

In the procedure, basically, the photoelectrode 101 and the counter electrode 102 are stacked so that the porous semiconductor layer 106 of the photoelectrode 101 and the conductive layer 108 of the counter electrode 102 face each other. The organic compound solution 109 containing the nitroxyl radical compound and the organic solvent is injected into the organic compound holding layer 103 between both electrodes, thereby obtaining the basic structure.

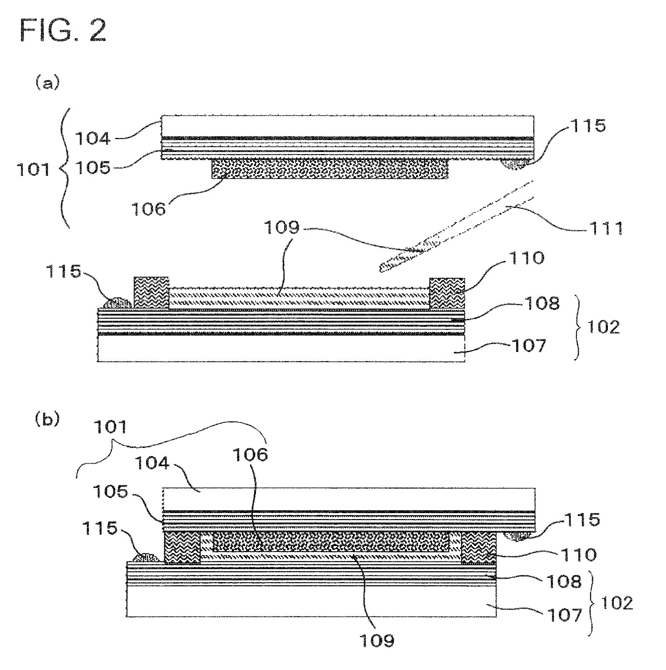

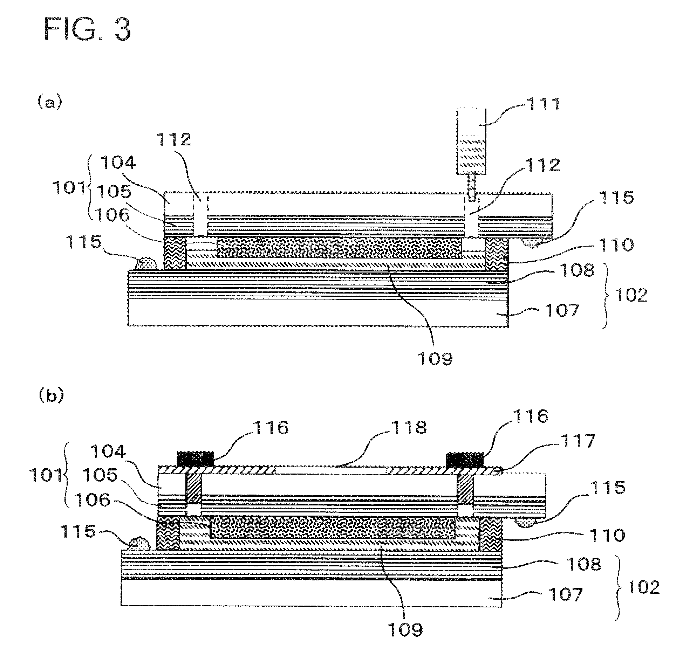

A specific example of the method of forming an element will be described with reference to Figs. 2 and 3. Figs. 2 and 3 are sectional views illustrating the method of manufacturing the photoelectric conversion element 100.

Figs. 2(a) and 2(b) show the simplest and easiest method of forming an element. First, a sealing portion (the sealing member 110) is formed in the periphery of the counter electrode 102 (the transparent electrode 107 and the conductive layer 108) out of a sealing material. The resultant structure is disposed so that the conductive layer 108 is directed to the upside, and then an appropriate amount of electrolyte of the organic radical compound electrolyte (the organic compound solution 109) is filled therein by the use of a filling instrument (an organic compound solution filling instrument 111) such as a pipette (Fig. 2(a)). The photoelectrode 101 is stacked thereon so that the porous semiconductor layer 106 faces the counter electrode 102, and the outer periphery is sealed with the sealing member, whereby the photoelectric conversion element 100 shown in Fig. 1 is obtained (Fig. 2(b)). Here, the electrodes are opposed to each other in an offset state and uses the portion not overlapping with each other as a power collection and connection portion 115.

Here, the sealing member 110 is formed of, for example, a thermoset resin, a light-curing resin, or a thermoplastic resin. An epoxy resin, a polyvinyl resin, a polyolefin resin, an ethylene vinylacetate (EVA), and the like are used as the resin materials and a paste type or a film type is used depending on the purpose.

As shown in Fig. 3(b), a light-blocking frame (a light-blocking mask 117) may be disposed on the transparent substrate of the photoelectrode. Accordingly, it is possible to adjust the amount of light applied, thereby suppressing the deterioration of the sealing member. It is preferable that an ultraviolet cutoff filter may be disposed before the photoelectrode.

As shown in Fig. 3(a), the structure in which the photoelectrode 101 in which two or more through-holes (the organic compound solution inlet and outlet 112) are formed in the part not having the semiconductor layer formed therein and the counter electrode 102 are stacked may be prepared and the organic compound solution 109 may be injected through the through-holes of the photoelectrode part. In this method, for example, a power type of the organic radical compound and the solvent may be individually filled therein. After the injection, the inlet (the organic compound solution inlet and outlet 112) may be sealed by the use of a sealing member (a sealing screw 116) such as an O-ruing or a screw.

In Fig. 3, since the organic compound solution inlet and outlet 112 which is the through-hole can be also used as an outlet, the organic compound can be easily exchanged through the through-hole. The light-blocking mask 117, the ultraviolet cutoff filter, or the like can be inserted through the use of the through-holes.

By connecting the electrode drawing ports formed in this way in series or in parallel, it is possible to obtain a stack.

Since the obtained photoelectric conversion element 100 employs the nitroxyl radical compound having the structure of 4,4,5,5-tetraalkyl imidazoline-1-oxyl 3-oxide expressed by General Formula. 1, it is not necessary to use a redox agent including iodine/iodide ions.
That is, the nitroxyl radical compound having the structure of 4,4,5,5-tetraalkyl imidazoline-1-oxyl 3-oxide has a light-absorbing function and an oxidation and reduction function. Accordingly, by holding the solution in which the organic radical compound is dissolved in the solvent between the electrodes, it is possible to stably obtain a new photoelectric conversion element which can embody both functions of the dye sensitizer of the photoelectrode portion and the redox agent of the electrolyte layer, which was not possible in the related art, by the use of a single organic compound.

The dye sensitization effect is enhanced by employing the nitroxyl radical compound having the structure of 2-(4-carboxylphenyl)-4,4,5,5-tetramethyl imidazoline-1-oxyl 3-oxide expressed by General Formula 3 and thus this operational advantage is markedly exhibited.
The stability is enhanced by employing the nitroxyl radical compound having the structure of 2-phenyl-4,4,5,5-tetramethyl imidazoline-1-oxyl 3-oxide expressed by General Formula 2 and thus this operational advantage is marked exhibited.

Since the photoelectric conversion element 100 has the compound expressed by General Formula 1 between the electrodes and it is not necessary individually treat the dye sensitizer and the redox agent as in the related art, it is possible to simplify the element structure and to simplify the manufacturing process, thereby manufacturing the photoelectric conversion element at a low cost.

That is, in the configuration according to the related art, the Ru complex of the dye was not cheap, the electrolyte containing iodine had to be air-tightly sealed, and thus the element structure and the manufacturing process were not simple and easy. In addition, the dye was strongly adsorbed to the titanium dioxide electrode and the iodine redox agent was easily crystallized. Accordingly, when deterioration occurs, it was not impossible to reproduce the photoelectric conversion element. In this embodiment, it is possible to embody the photoelectric conversion element 100 which is cheap and excellent in usefulness by employing the nitroxyl radical compound having the structure of 4,4,5,5-tetramethyl imidazoline-1-oxyl 3-oxide which has the light-absorbing function, that is, the dye sensitizing function, and the redox function.

The solution containing the organic radical compound expressed by General Formula 1 is high in fluidity and thus can be instantaneously replaced. As a result, even when the organic radical compound deteriorates, it is possible to reproduce the photoelectric conversion element as a battery and to change the characteristic at any time by changing the kind of the organic radical compound. For example, by changing the light-absorbing wavelength range of the organic radical compound, it is possible to broaden a usable environment or a design property. It was very difficult to achieve this advantage by the use of the element structure according to the related art.

### (Second Embodiment)

The photoelectric conversion element 100 (Fig. 1) according to the first embodiment is very suitably used, for example, as a dye-sensitized solar cell.
When solar light is applied from the side of the photoelectrode 101 of the photoelectric conversion element 100, the solar light passes through the transparent electrode 104 and the conductive layer 105 in this order and is applied to the dye (not shown in the drawing) adsorbed to the porous semiconductor layer 106. The dye absorbs the light and is thus excited. Electrons generated by this excitation migrate to the conductive layer 205 from the porous semiconductor layer 106 The electrons migrating to the conductive layer 105 migrates to the counter electrode 102 via an external circuit and returns to the dye via the organic compound solution 109 from the conductive layer 108. In this way, current flows to constitute a solar cell.

Plural photoelectric conversion elements according to the invention can be used as a photoelectric conversion element stack for a solar photovoltaic system.

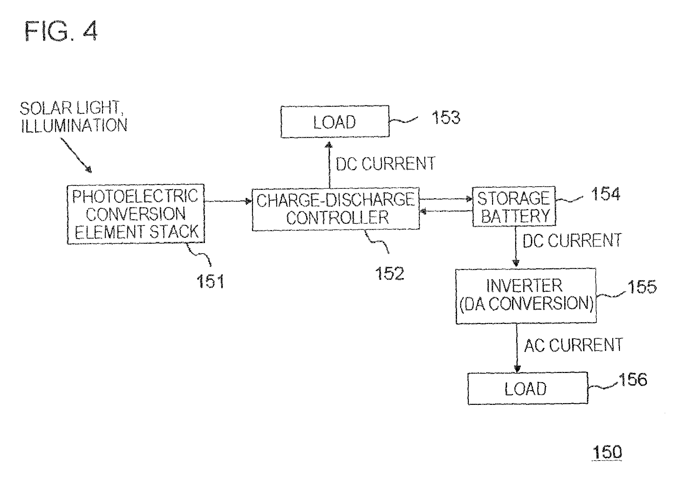

Fig. 4 is a diagram illustrating a specific example of a solar photovoltaic system. In the solar photovoltaic system 150 shown in Fig. 4, electrons generated in the photoelectric conversion element stack 151 migrate to a storage battery 154 via a charge-discharge controller 152. A load 153 is connected to the charge-discharge controller 152. The DC current from the storage battery 154 is converted in a DA conversion manner by an inverter 155 and flows in a load 156.

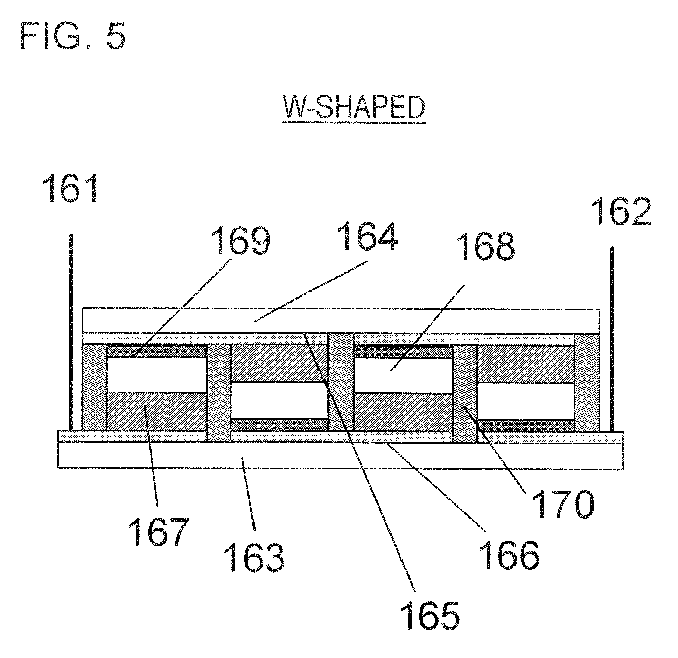

The configuration of the photoelectric conversion element stack 151 is not particularly limited and examples thereof are shown in Figs. 5 to 8. Figs. 5 to 8 are sectional views the configurations of the photoelectric conversion elements 151.

Fig. 5 shows a W-shaped stack module.
In Fig. 5, plural photoelectric conversion elements each including a photoelectrode 167, an organic compound solution 168, and a counter electrode (the counter electrode) 169 having a catalyst function are disposed between a transparent substrate 163 and a transparent substrate 164. The photoelectrode 167 is formed of, for examples, the porous semiconductor layer 106 according to the first embodiment. A transparent conductive film 166 and a transparent conductive film 165 are disposed between the transparent substrate 163 and the photoelectrode 167 and between the transparent substrate 164 and the counter electrode 169. These transparent conductive films are disposed in common to the photoelectrode 167 of an element and the counter electrode 169 of an element adjacent thereto, whereby the adjacent elements are connected to each other. The plural transparent conductive films 165 and the plural transparent conductive films 166 are sealed and isolated from each other with a sealing member 170 formed of an insulating material. Both ends of the transparent substrate 163 are connected to an anode (minus electrode) 161 and a cathode (plus electrode) 162, respectively.

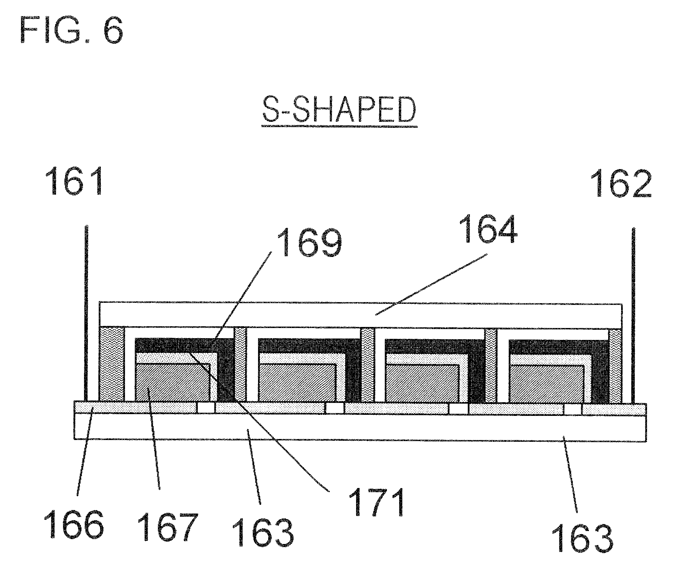

Fig. 6 shows an S-shaped stack module.
In Fig. 6, a photoelectrode 167 is disposed on the transparent conductive film 166 and a separator 171 covering the photoelectrode 167 and a counter electrode 169 covering the entire surface of the separator 171 are disposed on the top surface and the side surface of the photoelectrode 167, whereby an element is constituted. In Fig. 6, the photoelectrode 167 of an element and the counter electrode 169 of an element adjacent thereto are disposed on a single transparent substrate 163 via a common transparent conductive film 166.

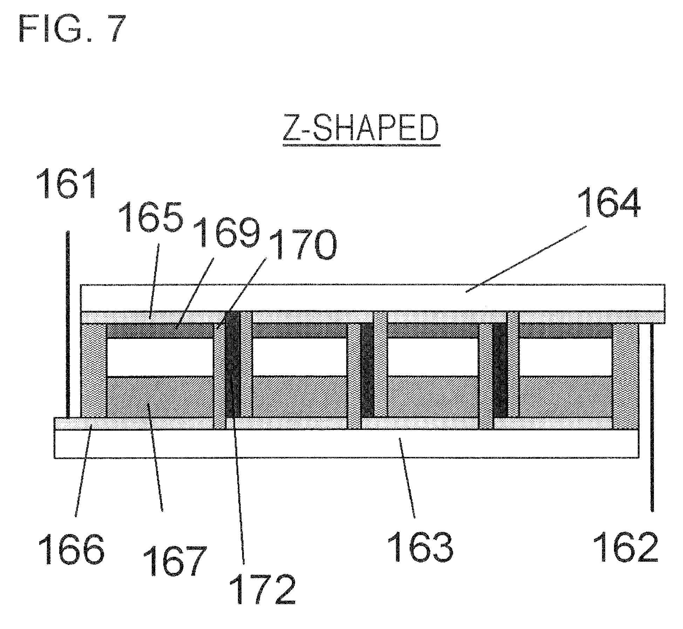

Fig. 7 shows a Z-shaped stack module.
The basis configuration of Fig. 7 is the same as the M-shaped stack module shown in Fig. 5, but a transparent conductive film 165 and a transparent conductive film 166 are disposed for each element. The photoelectrode 167 of an element is connected to the counter electrode 169 of an element adjacent thereto via the transparent conductive film 166, a conductive sealing member 172, and the transparent conductive film 165 of the adjacent element. The side outer periphery of the conductive sealing member 172 is covered with sealing members 170, except for regions coming in contact with the transparent conductive film 165 and the transparent conductive film 166.

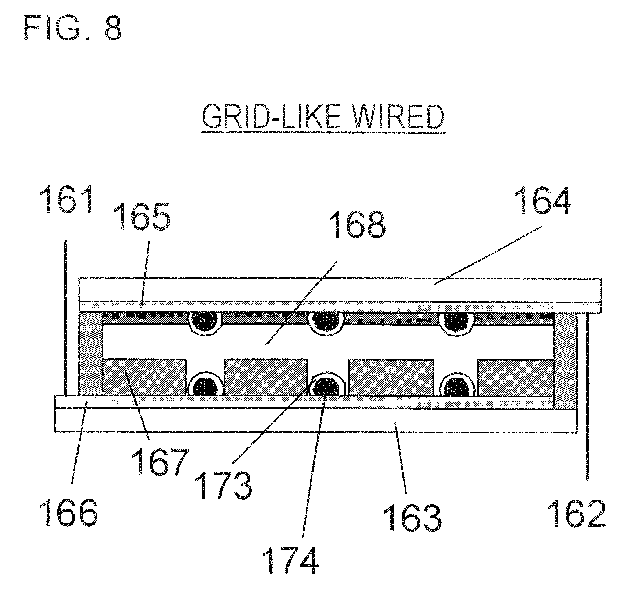

The W-shaped, S-shaped, and Z-shaped stack modules shown in Figs. 5 to 7 are stack modules in which small-sized cells are connected in series, but a grid-like wired module may be employed as shown in Fig. 8.
In Fig. 8, an organic compound solution 168, a transparent conductive film 165, and a transparent conductive film 166 are disposed in common to plural elements and metallic collection wires 174 are disposed at predetermined positions on the transparent conductive film 165 and the transparent conductive film 166. Each metallic collection wire 174 is covered with an insulating film 173 and is thus insulated from the organic compound solution 168.

The grid-like wired module is a module that can further decrease the power collection loss when a cell is increased in area. The grid-like wired module may be stacked in the Z, W, or S shape.

In Figs. 5 to 8, light is incident from the side of the photoelectrode 167. In the W-shaped stack module shown in Fig. 5, light is incident from both sides. By employing a substrate having a high light-transmitting property as the substrate of the counter electrode 169, it is possible to enable light to be incident, from both sides.

In Figs 5 to 8, it has been stated that the transparent substrate 163 and the transparent substrate 164 are used as the substrates. However, for example, a material not having a light-transmitting property may be used for the substrate of the counter electrode in the W-shaped, S-shaped, and grid-like wired stack modules. Examples of this material include PEES, SUS, and Si.

While the embodiments of the invention have been described with reference to the accompanying drawings, theses are only examples of the invention and various configurations other than the above-mentioned configurations may be employed.

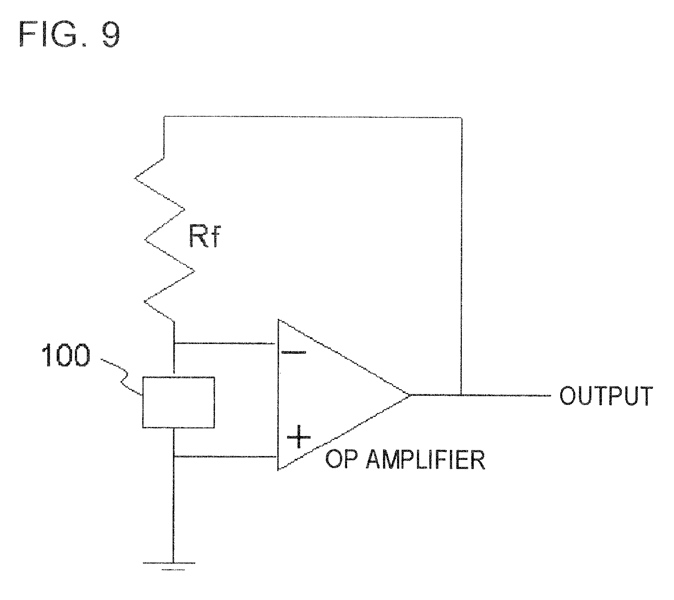

For example, the photoelectric conversion element according to the embodiments may be used in an optical sensor in addition to a solar cell. Fig. 9 is a diagram illustrating the circuit configuration of an optical sensor including the photoelectric conversion element 100 (Fig. 1).

Examples of the invention will be specifically described below, but the invention is not limited to the examples.
In the following examples, a solar cell including the photoelectric conversion element 100 (Fig. 1) according to the invention was manufactured.

### (Example 1)

A photoelectric conversion element according to the invention was manufactured as follows. First, 5 g of a commercially-available titanium dioxide powder (produce name: P25, made by Nippon Aerosil Co., Lid.), 20 mL of 15 vol% solution of acetate, 0.1 mL of surfactant (product name: Triton X-100, made by Sigma-Aldrich Co., Ltd.), and 0.3 g of polyethylene glycol (with a molecular weight of 20,000) were stirred with a stirring mixer to prepare a titanium dioxide paste for forming a porous semiconductor layer.

Then, the titanium dioxide paste was applied by an appropriate amount (application area: 3 cm×3 cm) onto an ITO glass substrate (6 cm×4 cm, sheet resistance: 20 Ω/□) so as to have a thickness of 20 µm by the use of a doctor blade method. Here, the part to which the paste was not applied was used as the electrode extraction portion and the sealing portion. Four through-holes with 0.5mm□ were formed between the applied portion and the sealing portion. The electrode was inserted into an electric furnace, was baked in the air atmosphere at 450°C for about 30 minutes, and was naturally cooled, whereby a transparent conductive electrode having the porous titanium dioxide semiconductor layer formed thereon was obtained.

An electrode in which platinum was deposited with a thickness of 1 µm on one surface of an ITO glass substrate (6 cm×4 cm, sheet resistance: 20 Ω/□) was prepared as a counter electrode. The electrode with the semiconductor layer formed thereon and the counter electrode were arranged as shown in Fig. 3 and the peripheries were sealed with an epoxy resin.

Then, 2-phenyl-4,4,5,5-tetraalkyl imidazoline-1-oxyl 3-oxide (hereinafter, referred to as PTIO) expressed by Formula 2 was prepared as the nitroxyl radical compound serving as a dye sensitizer and a redox agent.
First, 10 mL of a 0.5 M PTIO solution was prepared using dehydrated ethanol as a solvent. Then, 1 M of lithium bis(pentafluoroethane sulfonyl) imide (LiBETI) electrolyte using propylene carbonate as a solvent was prepared and 2 mL was added to the PTIO, whereby the final PTIO organic radical compound solution was obtained.

The organic compound solution containing the PTIO was filled through a transfer pipette through the use of the through-holes of the photoelectrode portion. Here, a SUS plate with a thickenss of 1 mm having an 1 cm×1 cm opening was stacked as a light-blocking mask on the photoelectrode and the through-holes were finally sealed with an O-ring-attached screw.

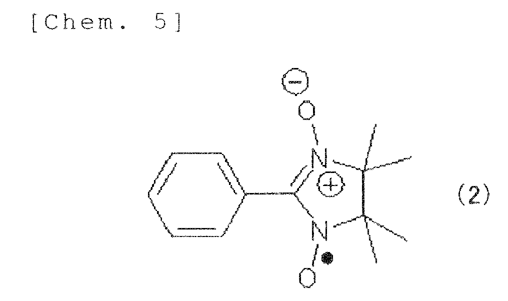

### (Example 2)

A photoelectric conversion element was manufactured in the same manner as in Example 1, except that 2-(4-carboxylpneny)-,4,5,5-tetraalkyl imidazoline-1-oxyl 3-oxide (hereinafter, referred to as carboxyl PTIO) was used instead of the PTIO in Example 1.

### (Comparative Example 1)

A photoelectric conversion element was manufactured in the same way as in Example 1, except that 2,2,6,6-tetramethylpiperidine N-oxyl (TEMPO) substantially not having a light-absorbing function (equal or less than 1/100 of the PTIO) was used instead of the PTIO in Example 1.

### (Comparative Example 2)

A photoelectric conversion element was manufactured in the same way as in Example 1, except that 0.5 M/L potassium iodide, 0.05 M/L iodine, 0.5 M/L 4-t-butylpyridine, which were widely used in part, were used instead of the organic radical compound solution in Example 1.

### (Example 3)

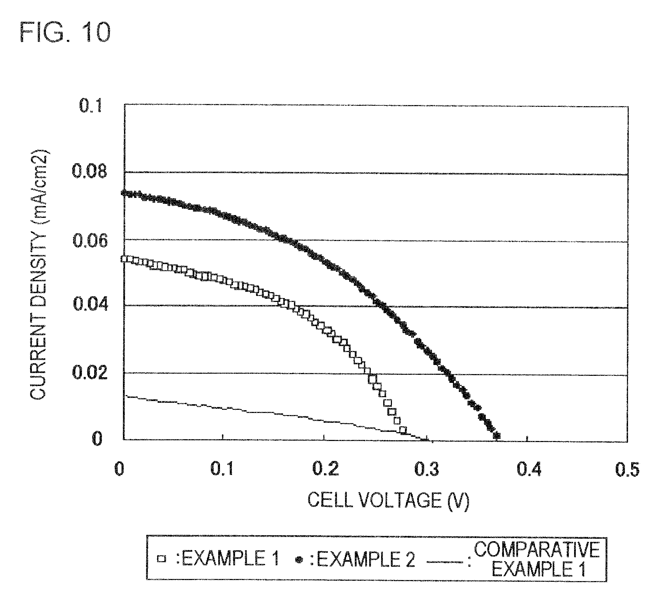

The photoelectric conversion elements prepared in Examples 1 and 2 and Comparative Examples 1 and 2 were compared with each other in performance as a dye-sensitized solar cell. For evaluation, the I-V measurement was carried out under the irradiating conditions of AM 1.5 and 100 mW/cm² by the use of a solar simulator. Mere, both ends of the photoelectric conversion elements were connected to an electronic load and the potential scanning of a 5 mV/sec step was repeatedly carried out from an open voltage until the voltage is zero. The I-V curves of Examples 1 and 2 and Comparative Example 1 were shown in Fig. 10.

From Fig. 10, it can be seen that the open voltage and the short-circuit current in Examples 1 and 2 are more improved than those of Comparative Example 1. Particularly, the short-circuit current proportional to the reaction surface area is larger by 43 times. This is because the TEMPO used in Comparative Example 1 serves as only the redox agent but the PTIO used in Example 1 serves as both the dye sensitizer absorbing light and the redox agent. Particularly, this effect is more marked in Example 2 in which a carboxyl group was introduced. The examples proved that the single organic radical compound stably performed both functions of the dye sensitizer and the redox agent.

### (Example 4)

The photoelectric conversion elements according to Example 1 and Comparative Example 2 were repeatedly subjected to the power generation several times, the solution held between the electrodes was discharged through the use of the extraction port and was replaced with a new one, and then the resultants were subjected to the power generation.

As a result, the element according to Example 1 did not show the deterioration in power generation performance before and after. On the other hand, the short-circuit current was lowered by about 20% in the element according to Comparative Example 2. After the measurement, both were dissembled and the insides of the electrodes were checked with eyes. Example 1 did not show any great variation, but iodine was educed on the titanium dioxide layer in Comparative Example 2 of the related art.

From this result, it could be seen that the photoelectric conversion elements according to the examples easily exchanged the organic radical compound corresponding to the dye sensitizer and the redox agent and achieved the same performance as at the initial time.

This application claims the priority based on Japanese Patent, Application No. 2009-053148 filed Mach 6, 2009, details of which are incorporated herein by reference.

## Claims

1. A photoelectric conversion element comprising:
a photoelectrode that includes a semiconductor layer and a transparent conductive substrate; and
a counter electrode that is opposed to the photoelectrode,
wherein a nitroxyl radical compound, expressed by General Formula 1 is mainly enclosed between the photoelectrode and the counter electrode: 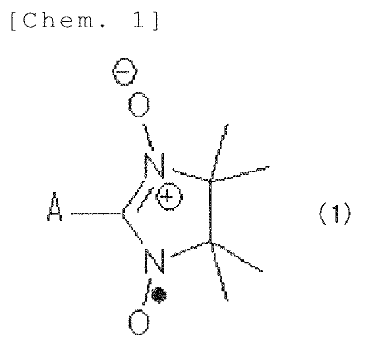 (where A in General Formula 1 represents a substituted or unsubstituted aromatic group and may contain one or more atoms of oxygen, nitrogen, sulfur, silicon, phosphorus, boron, or a halogen and the aromatic group may be obtained by condensing a plurality of aromatic group).

2. The photoelectric conversion element according to claim 1, wherein the nitroxyl radical compound expressed by General Formula 1 is a compound expressed by General Formula 2:

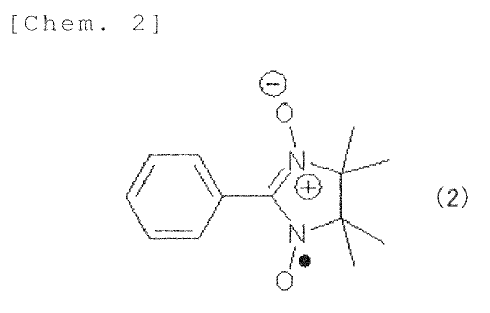

3. The photoelectric conversion element according to claim 1, wherein the compound expressed by General Formula 1 contains:
a compound expressed by General Formula 2; and
a compound in which A in General Formula 1 has one or more substituents selected from the group consisting of an alkoxy group, a hydroxyl group, a hydroxyalkyl group, a sulfonate group, an ester group, a mercapto group, and a phosphonyl group:

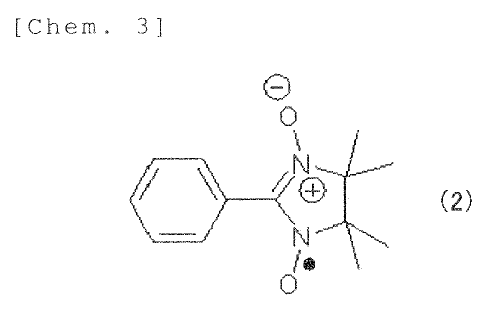

4. The photoelectric conversion element according to claim 1, wherein the nitroxyl radical compound expressed by General Formula 1 is a compound expressed by General Formula 3:

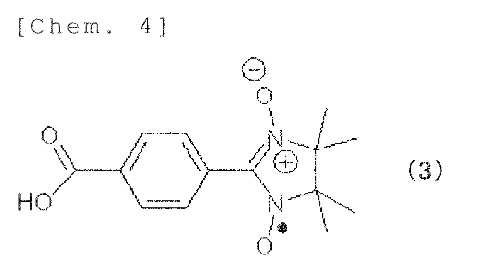

5. The photoelectric conversion element according to any one of claims 1 to 4, wherein the nitroxyl radical compound is enclosed as a solution in which the nitroxyl radical compound is dissolved in one or more selected from the group consisting of an organic solvent, a molten salt, and an ionic liquid between the photoelectrode and the counter electrode.

6. The photoelectric conversion element according to any one of claims 1 to 5, wherein the semiconductor layer is formed of a semiconductor material containing titanium dioxide.

7. An optical sensor comprising the photoelectric conversion element according to any one of claims 1 to 6.

8. A solar cell comprising the photoelectric conversion elements according to any one of claims 1 to 6.

9. A method of manufacturing a photoelectric conversion element, comprising:
preparing a semiconductor electrode formed of a porous semiconductor material;
disposing a counter electrode to be opposed to the semiconductor electrode; and
impregnating and inclosing a liquid containing dye and electrolyte between the semiconductor electrode and the counter electrode,
wherein the dye and electrolyte contains a nitroxyl radical compound expressed by General Formula 1: 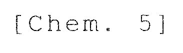 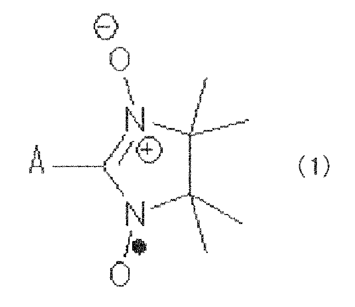 (where A in General Formula 1 represents a substituted or unsubstituted aromatic group and may contain one or more atoms of oxygen, nitrogen, sulfur, silicon, phosphorus, boron, or a halogen and the aromatic group may be obtained by condensing a plurality of aromatic group).
